# EUROPEAN PATENT APPLICATION

(11) **EP 3 511 533 A1**
(43) Date of publication of application: **17.07.2019**
(21) Application number: 18211554.3
(22) Date of filing: 11.12.2018
(51) Int. Cl.: F01D 25/28, F01D 25/34, F02K 3/06

(54) **SYSTEM AND METHOD FOR BLADE POSITIONING IN A GAS TURBINE ENGINE**

(30) Priority: 11.01.2018 GB 201800414
(71) Applicant: Rolls-Royce plc, London SW1E 6AT (GB)
(72) Inventor: Benson, Christopher, Derby, Derbyshire DE24 8BJ (GB)
(74) Representative: Rolls-Royce plc

(57) **Abstract**

A gas turbine engine assembly comprises a gas turbine engine comprising a fan with a plurality of fan blades, a compressor, a combustor and a turbine, the turbine comprising a rotor coupled to the fan through a shaft, the shaft comprising a first joint arranged within a tail bearing housing; and a driving device comprising a second joint adapted to be coupled to the first joint, the driving device being adapted to rotate the shaft to position a fan blade of the plurality of fan blades in an inspection and/or removal position. A method of positioning a fan blade in a gas turbine engine and a fan blade positioning system are also provided.

## Description

The present disclosure concerns a gas turbine engine and in particular a system and a method of positioning a fan blade of a gas turbine engine.

Gas turbine engines may be used to power various systems. For example, gas turbine engines may be used to power aircraft, ships and electrical generators.

An exemplary gas turbine engine for aircrafts comprises a fan with a plurality of fan blades, a compressor, a combustor, and a turbine.

During servicing and maintenance of gas turbine engines, an operator may wish to inspect the fan blades to determine whether any repair work is required, for example if any fan blade needs to be replaced or repaired. For this purpose, the operator may manually rotate the fan to position the blade to be inspected in a convenient inspection and/or removal position, usually at bottom dead center position or 6 o'clock position.

However, with the increase in size of recently developed gas turbine engine, the fan may be too heavy to be manually rotated. Moreover, in recently developed gearbox gas turbines, the fan is connected to the compressor and the turbine through a power gearbox, which magnifies the inertia of the compressor and turbine by a power gearbox ratio larger than 1. In other words, the power gearbox would increase the effective torque required to turn the fan by hand since it would magnify the inertia of the compressor and turbine by the power gear box ratio (>1), making it more difficult to turn, and to stop, the fan.
As a result, an operator may not be able to manually rotate the fan to position the fan blade in the inspection and/or removal position.

Accordingly it is desirable to overcome the above mentioned problems.

According to a first aspect, there is provided a gas turbine engine assembly comprising the gas turbine engine comprising a fan with a plurality of fan blades, a compressor, a combustor and a turbine, the turbine comprising a rotor coupled to the fan through a shaft, the shaft comprising a first joint arranged within a tail bearing housing; and a driving device comprising a second joint adapted to be removably coupled to the first joint, the driving device being adapted to rotate the shaft to position a fan blade of the plurality of fan blades in an inspection and/or removal position.
In other words, the first joint and the second joint may be adapted to transfer a torque from the driving device to the shaft.

In the present application, the term "removably" indicates that the driving device is not part of the engine and is not embedded in the engine. In other words, in flight, the gas turbine engine does not comprise the driving device.
In the present application, front and rear is with respect to the gas turbine engine, i.e. the fan being in the front and the turbine being in the rear of the engine. In this respect, the first joint may be arranged at a rear end of the shaft connecting the rotor of the turbine with the fan.
The gas turbine engine may further comprise a power gearbox connecting the fan and the compressor. In this regard, the shaft may connect the turbine and the compressor, such that, when the driving device rotates the shaft at a first rotational speed, the compressor may drive into rotation the fan at a second rotational speed.

In other words, the shaft may directly connect the fan and the turbine, or in an alternative embodiment, the fan may be connected to the compressor through a power gearbox, and the shaft may directly connect the compressor and the turbine. In both cases, by rotating the shaft, the fan is rotated.
The power gearbox may be a reduction power gear box with a power gear ratio larger than 1, i.e. when the compressor rotates at a first rotational speed drives into rotation the fan at a second rotational speed lower than the first rotational speed.

In gas turbine engines including a high pressure shaft connecting a high pressure turbine with a high pressure compressor, an intermediate pressure shaft connecting an intermediate pressure turbine with an intermediate pressure compressor, and the fan is connected to the intermediate pressure compressor through the power gear box, the first joint may be arranged on a rear end of the intermediate pressure shaft.

By providing a first joint in the shaft, it is possible to removably connect the driving device to the shaft and, by rotating the shaft, to rotate the fan. In other words, according to the disclosure, rather than directly driving the fan, the driving device is connected to the shaft of the turbine and indirectly drives the fan through the shaft and the power gearbox (if present).

The first joint may be arranged on a rear end of the shaft. Where the gas turbine engine comprises a high pressure shaft and an intermediate pressure shaft, the first joint may be provided in a rear end of the intermediate pressure shaft.

The method may comprises providing the first joint in a tail bearing housing at the rear end of the gas turbine engine.

The first joint and the second joint may be flanged joints adapted to be mutually and removably connected, for example by means of bolts and nuts. Alternatively, or in addition to the flange, the first joint and the second joint may be splined joints adapted to be mutually and removably connected.
Any other coupling may be used for connecting the shaft and the driving device, provided that a torque supplied by the driving device may be transferred to the shaft. Examples of other couplings that may be used are sleeve couplings with relative key(s) and keyway(s), gear couplings, Hirth joints, castellated couplings, etc. For example, the flanged joint of the first joint may comprise a castellated face (for example a curvic joint) adapted to be removably connected to the second joint of the driving device; or the first joint may comprise a female, or a male spline adapted to be removably connected respectively to a male, or female spline of the second joint.

The driving device may be either a motorised or manually driven driving device. The driving device may comprise an electric motor, for example a stepper motor. The driving device may comprise a motorised or manually driven gearbox. The driving device may further comprise a drive shaft, connected to the second joint and the gearbox.

The gear box may be of the worm wheel type. The gear box may be a step down gear box, i.e. the drive shaft rotates at a higher rate than the shaft coupling the turbine and the fan. In other words, the shaft coupling the turbine and the fan may be rotated at a slow speed, in a safe and controllable manner.

The assembly may further comprise a support frame bracing the driving device. The support frame may be connected to the gas turbine engine so as to be suspended from the ground.

The gas turbine engine of the assembly may further comprise an outlet guide vane flange and the support frame may be removably attached to the outlet guide vane flange. For example, the outlet guide vane flange may comprise coupling elements adapted to be coupled to the support frame bracing the driving device. The coupling elements may be holes (threaded or not) or slots achieved on the outlet guide vane flange. Alternatively, the coupling elements may be pins achieved on the outlet guide vane flange, or a mix of holes, slots and pins. The coupling elements of the outlet guide vane flange may form a bayonet-type coupling with the support frame. The support frame may be bolted to the outlet guide vane flange.

It is to be noted that when driving the shaft, the fan would be driven with the power gear ratio in favour (rather than against it), thus lightening the inertial load of the fan, compressor (if connected to the fan through the power gearbox) and turbine, increasing indexing resolution and further reducing the rotational speed of the fan.

According to a second aspect, there is provided a method of positioning a fan blade of a gas turbine engine comprising a fan, a compressor and a turbine, the fan being coupled with the turbine through a shaft. The method comprises providing a rear end of the shaft with a first joint; providing a driving device with a second joint; removably attaching the first joint of the shaft to the second joint of the driving device; driving the driving device to rotate the shaft, which in turn rotates the fan to position the fan blade in an inspection and/or removal position; and inspecting or removing the fan blade.

The method may comprises providing the first joint in a tail bearing housing at the rear end of the gas turbine engine.

In an embodiment, the gas turbine engine may comprise a power gearbox, the fan being connected to the compressor through the power gear box, and the method may further comprise driving the driving device to rotate the shaft, which in turn may rotates the compressor and fan through the power gearbox to position the fan blade in an inspection and/or removal position

In such embodiment, the shaft may connect the compressor and the turbine, and the fan may be connected to the compressor through a power gearbox, such that when driving the driving device to rotate the shaft, the compressor may be rotated and in turn may rotate the fan through the power gearbox.

The method may comprise bracing the driving device by a support frame.

The method may comprise connecting the support frame to the gas turbine engine. In particular, the method may comprise connecting the support frame to an outlet guide vane flange of the turbine. In an embodiment, the method may comprise bolting the support frame to an outlet guide vane flange of the turbine. Alternatively, the method may comprise free standing the support frame on the floor or a platform.

The driving device may comprise a gearbox system and the method may comprise driving the gearbox system manually, or by means of a motor. The gearbox system may be a step down gearbox system.

In an embodiment, the driving device may comprise a worm wheel system and the method may comprise driving the worm wheel system manually, or by means of a motor. The worm wheel system may be a step down worm wheel system.
In this context, the step down gearbox and worm wheel system provide a speed ratio larger than one, i.e. the rotational speed in input of the gearbox is larger than the rotational speed in output of the gearbox.

The method may further comprise stopping the driving device to stop the fan blade in the inspection and/or removal position.

According to a third aspect, there is provided a fan blade positioning system comprising a driving device comprising a motorised or manually driven worm wheel or gearbox system, and a support frame bracing the driving device, the driving device comprising a second joint being adapted to be connected to a first joint provided in a rear end of a shaft of a turbine of a gas turbine engine, the driving device being adapted to drive into rotation the shaft to position a fan blade in an inspection and/or removal position.
The support frame may be adapted to either free stand on the floor or on a platform or to be connected, for example bolted, to an outlet guide vane flange of the gas turbine engine.

The first joint may be provided in a tail bearing housing of the gas turbine engine.

The driving device may comprise an electric motor, or a manual crank, connected to the worm wheel or gearbox system.

By stopping the driving device, the fan blade positioning system may stop a fan blade in an inspection and/or removal position.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** is a sectional side view of a detail of the gas turbine engine of figure 1 to which a fan blade positioning system is connected;
**Figure 3** is a sectional top view of the detail of the gas turbine and fan blade positioning system of figure 2;
**Figure 4** is a schematic, rear view of the gas turbine and fan blade positioning system of figure 2;
**Figure 5** is a sectional side view of a detail of the gas turbine engine according to a first embodiment;
**Figure 6** is a rear view of a first joint of the gas turbine engine according to the first embodiment; and
**Figure 7** is a sectional side view of the first joint of the gas turbine engine and the second joint of the fan blade positioning system according to a second embodiment.

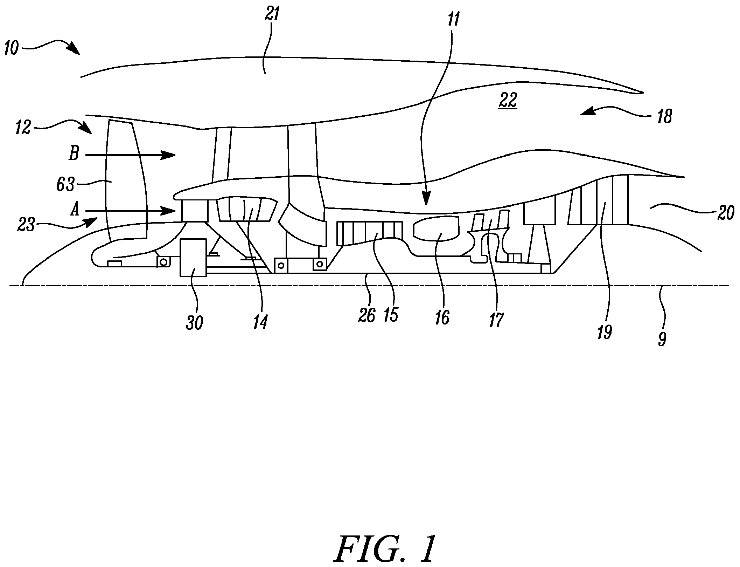

Figure 1 illustrates a gas turbine engine 10 having a principal rotational axis 9. The engine 10 comprises an air intake 12 and a propulsive fan 23 that generates two airflows A and B. The gas turbine engine 10 comprises a core engine 11 having, in axial flow A, an intermediate pressure compressor 14, a high-pressure compressor 15, combustion equipment 16, a high-pressure turbine 17, an intermediate pressure turbine 19 and a core exhaust nozzle 20. A nacelle 21 surrounds the gas turbine engine 10 and defines, in axial flow B, a bypass duct 22 and a bypass exhaust nozzle 18. The fan 23 is coupled to and driven by the intermediate pressure turbine 19 via shaft 26 and power gearbox 30. In detail, the fan 23 is connected to the intermediate pressure compressor 14 through the power gearbox 30 and the shaft 26 connects the intermediate pressure turbine 19 and the intermediate pressure compressor 14.. The power gearbox 30 may be an epicyclic gearbox of the planetary type, or a differential gearbox.

The gas turbine engine 10 works in a conventional manner with air in the core airflow A being accelerated and compressed by the intermediate pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive the high pressure and intermediate pressure turbines 17, 19 before being exhausted through the nozzle 20 to provide some propulsive thrust. The high pressure turbine 17 drives the high pressure compressor 15 by a suitable interconnecting shaft. The fan 23 generally provides the majority of the propulsive thrust. The power gearbox 30 is a reduction gearbox, i.e. the propulsive fan 23 rotates at a slower speed than the intermediate pressure compressor 14.

Additionally or alternatively the power gearbox may drive additional and/or alternative components (e.g. the high pressure compressor and/or a booster compressor, propeller (aero or hydro), or electrical generator). Additionally or alternatively such engines may have an alternative number of compressors and/or turbines and/or an alternative number of interconnecting shafts.

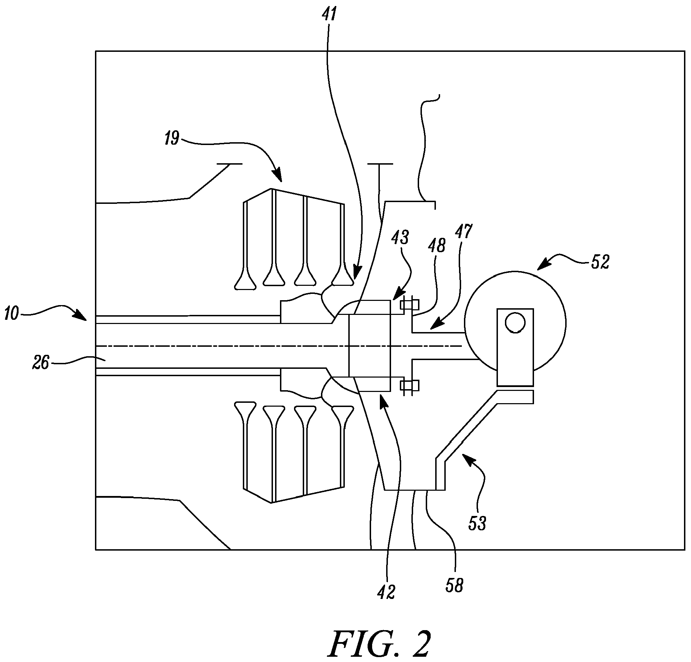

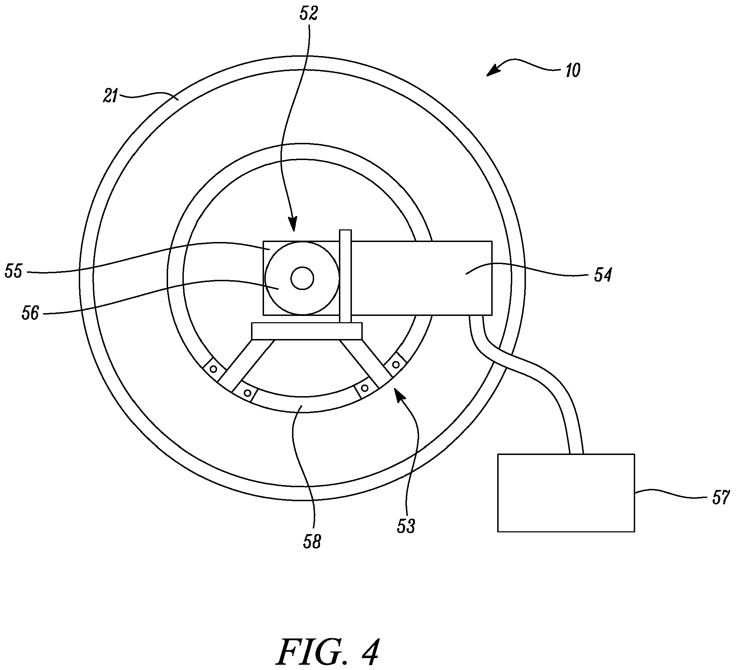

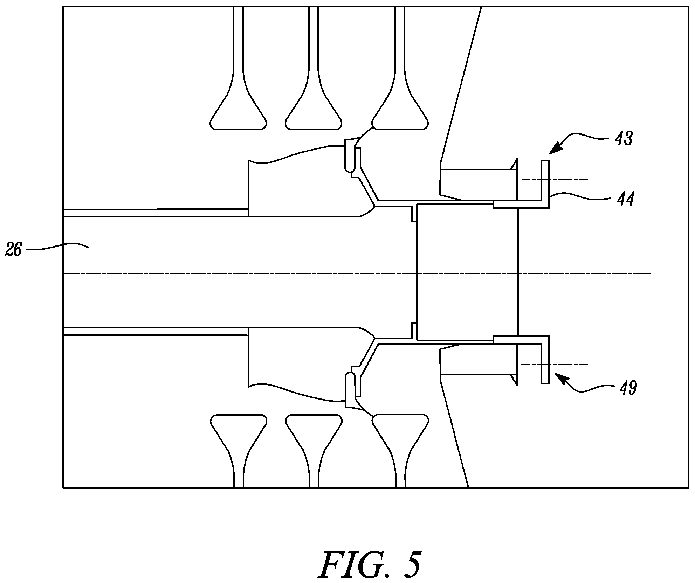

With reference to figure 2 to 6, a rear portion of the gas turbine engine 10 and a fan blade positioning system 40 are illustrated.

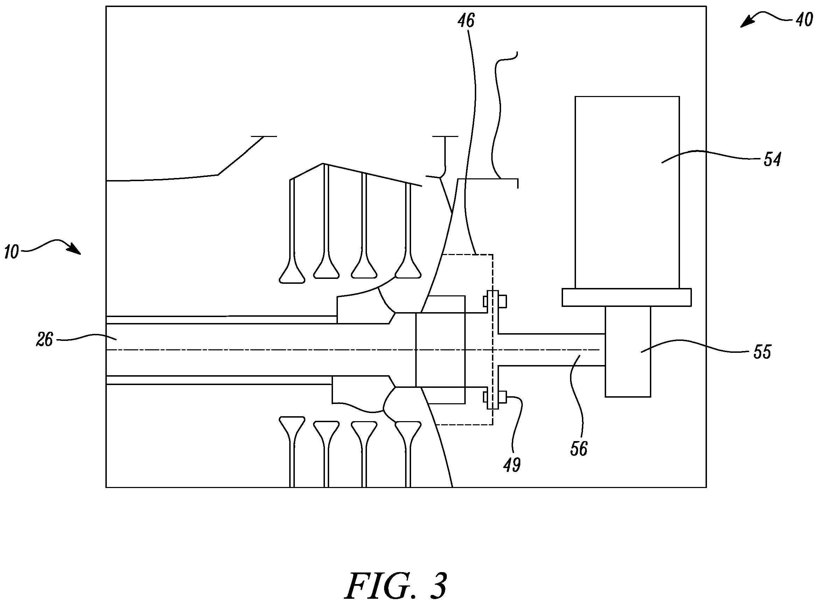

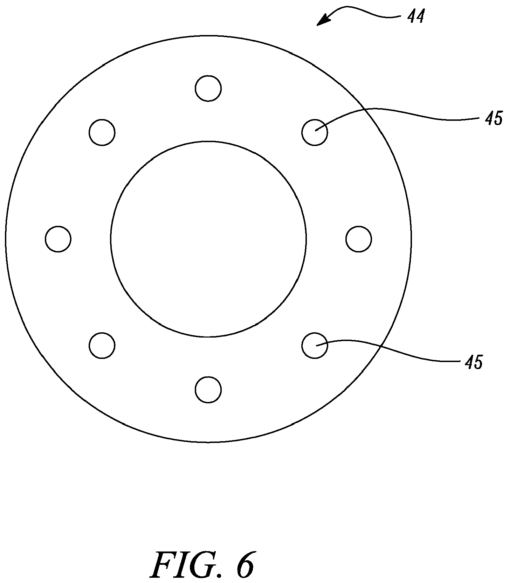

The intermediate pressure turbine 19 comprises a rotor 41 connected to the intermediate pressure compressor 14 through the shaft 26. At a rear end 42, the shaft 26 is provided with a first joint 43, for example a first flange 44 (visible more clearly in figure 6), provided with holes 45. The first joint 43 may be arranged within a tail bearing housing 46, schematically illustrated in figure 3 only, in dashed line for sake of clarity.

The fan blade positioning system 40 comprises a driving device 52 and a support frame 53 bracing the driving device 52.

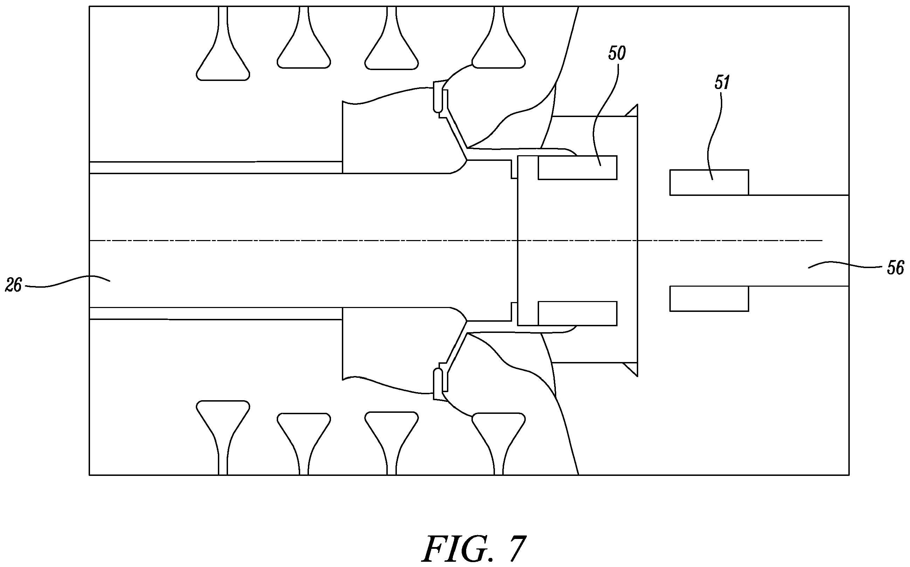

The driving device 52 comprises a second joint 47, for example a second flange 48, adapted to be connected to the first flange 44, for example by means of bolts and nuts, generally indicated at 49 in fig. 3. In embodiments where the first joint 43 is arranged within the tail bearing housing 46, to connect the first joint 43 to the second joint 47 it may be necessary to remove the tail bearing housing 46 away from the shaft 26.
In an alternative embodiment illustrated in figure 7, the first joint 43 is a female splined joint with grooves 50 and the second joint 47 is a male splined joint with ridges 51.

The first joint 43 and the second joint 47 are adapted to be mutually and removably connected to transmit torque from the driving device 40 to the shaft 26.

The driving device 52 comprises a motor 54, for example a stepper motor, a gearbox system with a gearbox 55, and a drive shaft 56.
The motor 54 may be connected to a control unit 57. In alternative non-illustrated embodiment, the motor 54 may be replaced by a manual crank.
The gearbox 55 may be an epicyclic or worm wheel gearbox.
The drive shaft 56 bears at a first end the second joint 47 and at a second end is connected to the gearbox 55, to receive drive therefrom.
In an embodiment, the gearbox 55 is a reduction, or step down gearbox, i.e. the rotational speed of the drive shaft 56 is slower than the rotational speed of the motor 54. In general, the rotational speed in output of the gearbox may be slower than the rotational speed in input of the gearbox. Alternatively, the rotational speed in output of the gearbox may be equal to, or higher than, the rotational speed in input of the gearbox.

The gas turbine engine 10 further comprises an outlet guide vane flange 58. The support frame 53 is connected, for example by means of bolting, to the outlet guide vane flange 58.
Alternatively, in non-illustrated embodiment, the support frame 53 may be free standing on the floor, or on a platform.

During servicing and/or maintenance, the fan blade positioning system 40 is connected to the gas turbine engine 10. In particular, the first joint 43 and the second joint 47 are mutually and removably coupled, such that torque can be transferred from the driving device 52 to the shaft 26 and therefrom to the fan 23. In more detail, the fan blade positioning system 40 is connected to the rear end 42 of the shaft 26, such that the fan 23 in the front of the gas turbine engine 10 may be rotated by applying torque at the rear end 42 of the shaft 26, i.e. at the rear of the gas turbine engine 10.

Usually, for servicing and/or maintenance purposes, a fan blade 63 is positioned in the bottom dead center position, but it will be understood that the fan blade 63 can be precisely positioned in any rotational position about the principal rotational axis 9 of the gas turbine engine 10 by means of the fan blade positioning system 40.

With reference to the figures 1 to 7, a method of positioning a fan blade 63 according to an embodiment will be illustrated.

The method comprises providing a rear end 42 of the shaft 26 with a first joint 43; providing a driving device 52 with a second joint 47; removably attaching the first joint 43 of the shaft 26 to the second joint 47 of the driving device 52; driving the driving device 52 to rotate the shaft 26, which in turn rotates the fan 23 to position the fan blade 63 in an inspection and/or removal position at the bottom dead center position, or any other convenient rotational position; and inspecting or removing the fan blade 63.

Once the fan blade 63 that needs to be inspected or replaced reaches the inspection and/or removal position, the driving device 52 is stopped to stop the fan blade 63 in such inspection and/or removal position.

The method further comprises bracing the driving device 52 by the support frame 53 and connecting the support frame 53 to the gas turbine engine 10, in particular to the outlet guide vane flange 58 of the intermediate pressure turbine 19 or any other suitable parts of the gas turbine engine 10.

Alternatively, in a not illustrated embodiment, the method may comprise free standing the support frame 53 on the floor or a platform.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. Gas turbine engine assembly comprising:
- a gas turbine engine (10) comprising a fan (23) with a plurality of fan blades (63), a compressor (14, 15), a combustor (16) and a turbine (17, 19), the turbine (17, 19) comprising a rotor (41) coupled to the fan (23) through a shaft (26), the shaft (26) comprising a first joint (43) arranged within a tail bearing housing (46); and
- a driving device (52) comprising a second joint (47) adapted to be removably coupled to the first joint (43), the driving device (52) being adapted to rotate the shaft (26) to position a fan blade (63) of the plurality of fan blades (63) in an inspection and/or removal position.

2. Assembly according to the preceding claim, wherein the first joint (43) and the second joint (47) are flanged or splined joints adapted to be mutually and removably connected.

3. Assembly according to any one of the preceding claims, wherein the driving device (52) comprises a motorised or manually driven gearbox (55).

4. Assembly according to any one of the preceding claims, comprising a support frame bracing the driving device.

5. Assembly according to the preceding claim, wherein the gas turbine engine (10) further comprises an outlet guide vane flange (58) and wherein the support frame (53) is removably attached to said outlet guide vane flange (58).

6. Assembly according to the preceding claim, wherein the support frame (53) is bolted to the outlet guide vane flange (58).

7. Assembly according to any one of the preceding claims, wherein the gas turbine engine (10) further comprises a power gearbox (30) connecting the fan (23) and the compressor (14, 15), the shaft (26) connecting the turbine (17, 19) and the compressor (14, 15), such that, when the driving device (52) rotates the shaft (26) at a first rotational speed, the compressor (14, 15) drives into rotation the fan (23) at a second rotational speed lower than the first rotational speed.

8. Method of positioning a fan blade (63) of a gas turbine engine (10) comprising a fan (23), a compressor (14, 15) and a turbine (17, 19), the fan (23) being coupled with the turbine (17, 19) though a shaft (26), the method comprising:
- providing a rear end (42) of the shaft (26) with a first joint (43);
- providing a driving device (52) with a second joint (47);
- removably attaching the first joint (43) of the shaft (26) to the second joint (47) of the driving device (52);
- driving the driving device (52) to rotate the shaft (26), which in turn rotates the fan (23) to position the fan blade (63) in an inspection and/or removal position; and
- inspecting or removing the fan blade (63).

9. Method according to the preceding claim, further comprising bracing the driving device (52) by a support frame (53) .

10. Method according to the preceding claim, further comprising connecting the support frame (53) to the gas turbine engine (10) and optionally wherein connecting the support frame (53) to the gas turbine engine (10) comprises connecting the support frame (53) to an outlet guide vane flange (58) of the gas turbine engine (10).

11. Method according to any one of claims 8 and 9, further comprising free standing the support frame (53) on the floor or on a platform.

12. Method according to any one of claim 8 to 11, wherein the gas turbine engine (10) comprises a power gearbox (30), the fan (23) being connected to the compressor (14, 15) through the power gear box (30), the method further comprising driving the driving device (52) to rotate the shaft (26), which in turn rotates the compressor (14, 15) and fan (23) through the power gearbox (30) to position the fan blade (63) in the inspection and/or removal position.

13. Method according to any one of claims 8 to 12, wherein the driving device (52) comprises a gearbox system and driving the driving device (52) comprises driving the gearbox system manually, or by means of a motor (54).

14. Fan blade positioning system comprising:
- a driving device (52) comprising a motorised or manually driven worm wheel or gearbox system, and
- a support frame (53) bracing the driving device (52),
the driving device (52) comprising a second joint (47) being adapted to be connected to a first joint (43) provided in a rear end (42) of a shaft (26) of a turbine (17, 19) of a gas turbine engine (10), the driving device (52) being adapted to drive into rotation the shaft (26) to position a fan blade (63) in an inspection and/or removal position.

15. Fan blade positioning system according to the preceding claim, wherein the support frame (53) is adapted to either free stand on the floor or on a platform or to be bolted to an outlet guide vane flange (58) of the gas turbine engine (10).
